(19)

Europäisches
Patentamt
European
Patent Office
Office européen
des brevets

(11) **EP 2 468 538 B1**

(12) **EUROPEAN PATENT SPECIFICATION**

(45) Date of publication and mention
of the grant of the patent:
**25.02.2015 Bulletin 2015/09**

(51) Int Cl.:
***B60C 15/06*** *(2006.01)*

(21) Application number: **11194149.8**

(22) Date of filing: **16.12.2011**

(54) **Tire with optimized chafer**

Reifen mit optimiertem Wulstgummi

Pneu avec gomme de talon optimisée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2010 US 426181 P
28.04.2011 US 201113095992**

(43) Date of publication of application:
**27.06.2012 Bulletin 2012/26**

(73) Proprietor: **The Goodyear Tire & Rubber Company
Akron, OH 44316-0001 (US)**

(72) Inventor: **Van Riper, Philip Carl
Cuyahoga Falls, OH Ohio 44223 (US)**

(74) Representative: **Kutsch, Bernd
Goodyear SA
Patent Department
Avenue Gordon Smith
7750 Colmar-Berg (LU)**

(56) References cited:
**EP-A1- 1 671 814     JP-A- 8 156 533
JP-A- 11 301 220     US-A- 5 033 524
US-A- 5 591 282**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

<u>Field of the Invention</u>

The invention relates in general to tire manufacturing, and more particularly to a tire component such as a chafer.

<u>Background of the Invention</u>

Tire manufacturers have progressed to more complicated designs due to an advance in technology as well as a highly competitive industrial environment. In particular, tire designers seek to use multiple rubber compounds in a tire in order to meet customer demands. Using multiple rubber compounds per tire can result in a huge number of compounds needed to be on hand for the various tire lines of the manufacturer. For cost and efficiency reasons, tire manufacturers seek to limit the number of compounds available due to the extensive costs associated with each compound. Each compound typically requires the use of a Banbury mixer, which involves expensive capital expenditures. Furthermore, Banbury mixers have difficulty mixing up tough or stiff rubber compounds. The compounds generated from the Banbury mixers are typically shipped to the tire building plants, thus requiring additional costs for transportation. The shelf life of the compounds is not finite, and if not used within a certain time period, is scrapped.

Thus an improved method and apparatus is desired which substantially reduces the need for the use of Banbury mixers while providing an apparatus and methodology to provide custom mixing at the tire building machine by blending of two or more compounds together, and controlling the ratio of the compounds and other additives. Both non-productive compounds and productive compounds could be blended together. It is further desired to have a system at the tire building machine which provides for the ability to manufacture customizable compounds with accelerators. Yet an additional problem to be solved is to generate the compounds continuously at the tire building machine.

One component of interest is the tire chafer. The tire chafer is of interest because an optimal design can lower tire rolling resistance. The tire chafer is subject to stress, strain depending upon the use. Selection of chafer materials is often a compromise due to the nature of the stress-strain loading being location specific. In order to optimize the chafer design, the optimal material needs to be selected. Thus an improved chafer design is desired which improves rolling resistance.

JP-A-11-301220 describes a tire in accordance with the preamble of claim 1. JP-A- 8-156533 describes an aircraft tire having a chafer comprising three zones.

US-A- 5,033,524 describes a tire comprising a chafer and three elastomer protective layers of different materials.

<u>Summary of the Invention</u>

The invention relates to a tire in accordance with claim 1.

Dependent claims refer to preferred embodiments of the invention.

<u>Definitions</u>

"Carcass" means a laminate of tire ply material and other tire components cut to length suitable for splicing, or already spliced, into a cylindrical or toroidal shape. Additional components may be added to the carcass prior to its being vulcanized to create the molded tire.

"Radial" and "radially" mean directions radially toward or away from the axis of rotation of the tire.

<u>Brief Description of the Drawings</u>

The invention will be described by way of example and with reference to the accompanying drawings in which:

FIGS. 1 and 2 are schematics of mixing systems suitable for forming the inventions;
FIG. 2 is a stress strain diagram of the bead area of FIG. 1;
FIG. 3 is a schematic of a first embodiment of a tire bead area in accordance with the invention;
FIG. 4 is a schematic of a comparative example of a tire bead area and
FIG. 5 is a stress strain diagram of the bead area of FIG. 3.

<u>Detailed Description of the Invention</u>

I. <u>Tire Construction</u>

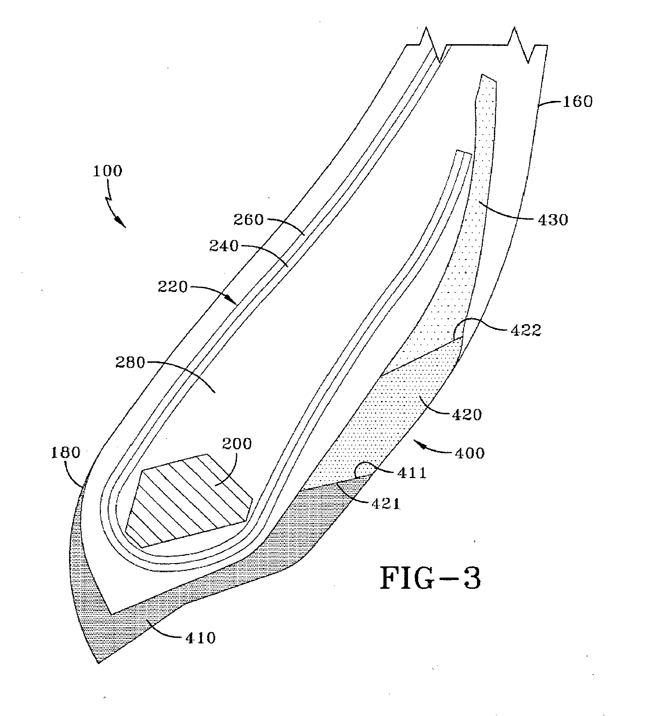

FIG. 3 illustrates a bead area of a tire 100 of the present invention. The tire may be a passenger tire, a truck tire, a run flat tire or pneumatic tire suitable for other applications. The tire has conventional tire components such as a ground-engaging tread (not shown) that terminates in the shoulders at the lateral edges of the tread. Sidewalls 160 extend from the shoulders and terminate in a pair of bead portions 180, each bead portion 180 has an annular inextensible bead core 200. The bead cores 200 are preferably constructed of a single or monofilament steel wire continuously wrapped and a suitable bead core construction is described in US-A- 5,263,526. The tire 100 has a carcass reinforcing structure 220 that extends from the first bead portion 180 through the first sidewall 160, tread, second sidewall portion 160 to the second bead portion 180.

The carcass reinforcing structure 220 comprises at least one reinforcing ply. In the illustrated embodiment, there is a first radially inner reinforcing ply structure 240, the ends of which are turned up around the bead cores 200, and may further include an optional second radially outer second reinforcing ply structure 260, the ends of which are turned about the bead cores 200. Each ply 240, 260 is formed from a single layer of parallel reinforcing cords. The cords may be made of any material normally used for cord reinforcement of rubber articles, for example, rayon, nylon, polyester, and steel. Preferably, the cords are made of material having a high adhesion property with rubber and high heat resistance. While this embodiment has shown only two plies, any number of carcass plies may be used.

Located within each bead portion 180 and the radially inner portion of the sidewall 160 is an elastomeric apex 280 disposed between carcass plies 240, 260 and the turnup ends of the first carcass ply 240. The elastomeric apex 280 extends from the radially outer side of the bead cores 200 and up into the sidewalls 160, gradually decreasing in cross-sectional width. The apex 280 terminates prior to the maximum section width of the tire 100.

Rolling resistance is directly related to energy loss Q of each tire component. Energy loss Q is directly proportionate to G" or loss modulus, and also directly proportionate to G' or storage modulus, as represented below.

$$Q \approx G'' * (G')^{M-1}$$

M is the deformation index. The deformation index can be further subdivided into three pure modes of deformation:

$$M = +1 \text{ for strain control}$$

$$M = 0 \text{ for energy control}$$

$$M = -1 \text{ for stress control.}$$

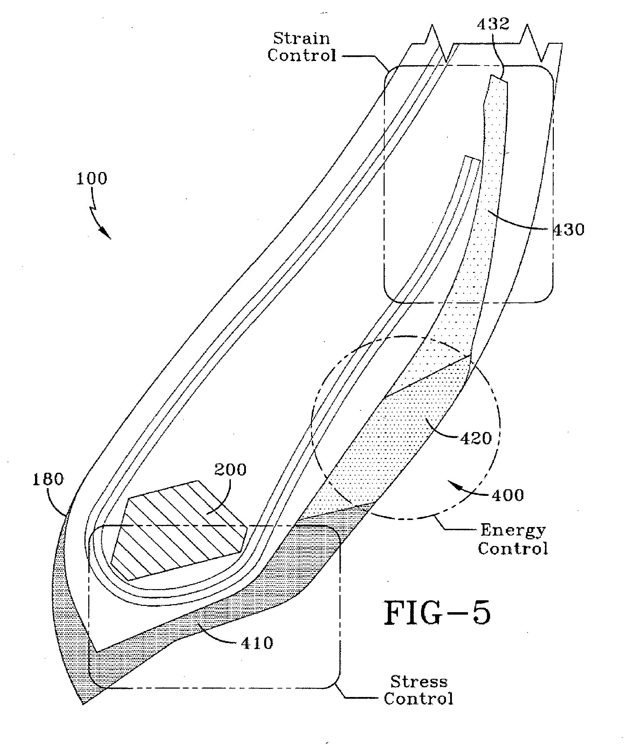

Thus depending upon the specific tire application, the tire chafer 400 can be subdivided into distinct energy control, stress control and strain control zones, as shown in FIG. 3. FIG. 5 illustrates finite element analysis of a radial medium truck tire wherein the chafer has been analyzed and the stress zones have been determined. FIG. 5 illustrates that the chafer component has three distinct zones. The tire chafer has a first zone 410 that is the radially innermost portion of the chafer and is located radially inward of the bead core 200. This first zone is the stress control zone, and begins axially inward of the bead core, extends radially inward and under the bead core, and axially outward of the bead core terminating at a location preferably at the same radial height of the bead core. The tire chafer has a second zone 420 that has a first end 421 adjacent the radially outer end 411 of the first zone. The second zone has a second end 422 that is radially outward of the bead about 1-2 bead diameters. Based upon the stress strain analysis, the second zone is the energy control zone. The tire chafer can be further divided into a third zone 430 that extends radially outward from the second zone to the outer tip 432 of the chafer. The third zone is representative of the strain control zone.

In each zone, the heat generation and thus the rolling resistance can be minimized by optimizing the material properties. For the stress control zone a material is selected such that the G"/G' ratio is minimized. For the energy control, G"/G' or tan delta is minimized. And for strain control, G" is minimized.

For the chafer as shown in FIG. 3, the first zone 410 is formed of a material having a G"/G' ratio in the range of 0.2 to 0.245. The second zone 420 is formed of a material having a G"/G' ratio in the range of 0.155 to 0.183. The third zone 430 is formed of a material having a G"/G' ratio in the range of 0.125 to 0.133.

| Deformation control | Target G"/ G' |
|---------------------|---------------|
| Strain              | 0.125-0.133   |
| Energy              | 0.155-0.183   |
| Stress              | 0.200-0.245   |

Unless otherwise noted, all G' values are measured on a rubber sample at a sample temperature of 90°C, at a measurement frequency of 10 Hz and at a strain amplitude of 50%. The rubber sample is taken from a cured tire manufactured to the desired manufacturer specifications. For the purposes of this invention, the storage modulus property G' is a viscoelastic property of a rubber composition and may be determined by a dynamic mechanical analyzer over a range of frequencies, temperature and strain amplitude. One example of a dynamic mechanical analyzer (DMA) suitable for measuring G', G" is model number DMA +450 sold by the 01-dB Metravib company. The DMA instrument uses dynamic mechanical analysis to evaluate rubber compositions. A cured sample of the respective rubber composition is subjected to a precisely controlled dynamic excitation (frequency and amplitude) at a frequency (Hertz) and temperature (°C) and the sample stress response is observed by the instrument. The observed sample response can be separated, by the instrument, into viscous or loss modulus (G") and elastic or storage modulus (G') components. Unless otherwise indicated, all G" are measured at the same conditions as G'.

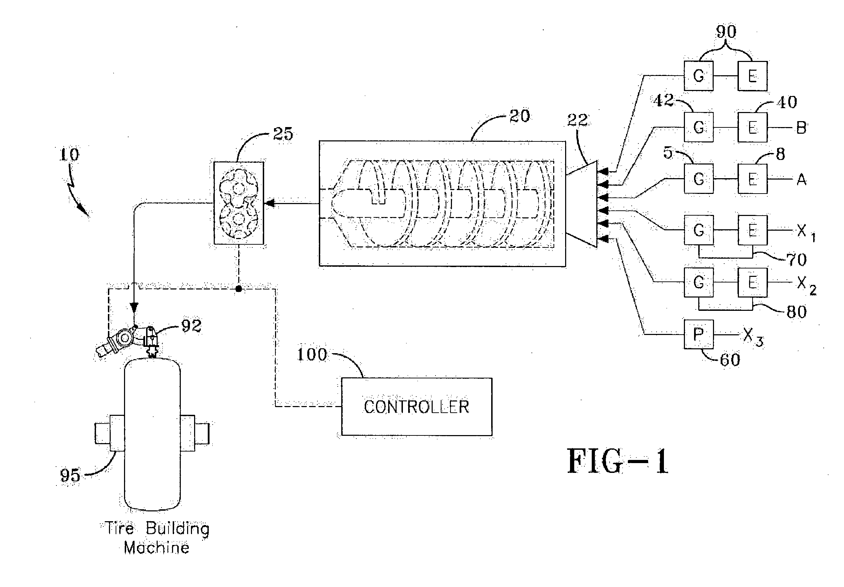

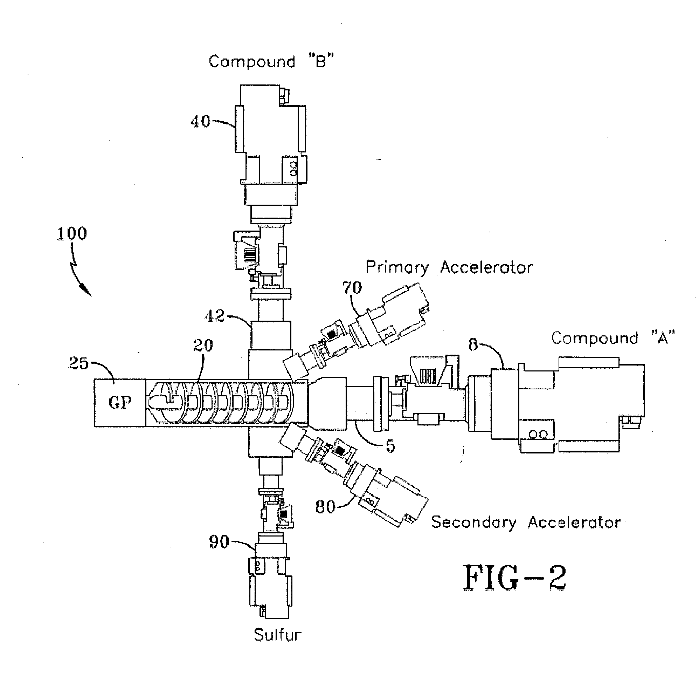

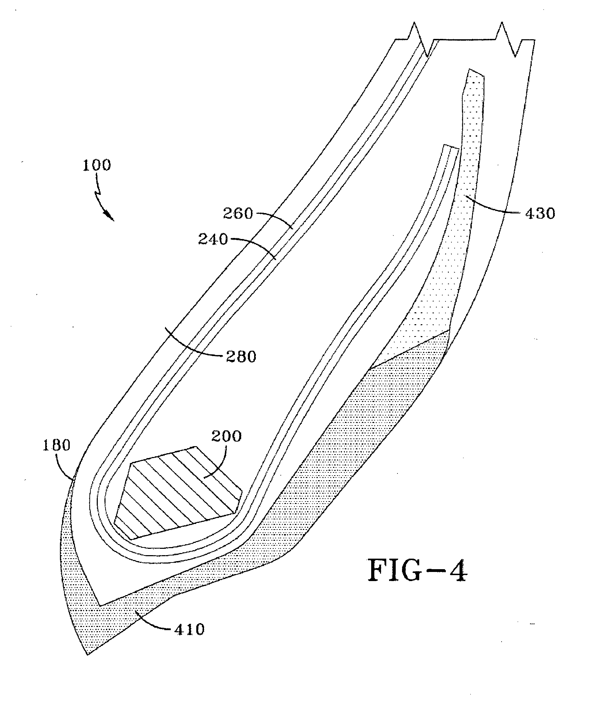

In order to form the chafer of multiple zones of different materials, the extruder apparati as described below may be utilized to continuously extrude a chafer having the desired material zones. A computer controller may be used to divide the chafer into a grid of small discrete annular subareas. For each discrete subarea, the desired material properties are selected. The extruder apparatus of FIGS. 1 or 2 may be used to continuously extrude a strip of a first rubber compound having the desired characteristics of zone 1. The extruder apparatus may also be used to extrude a second rubber compound having the desired characteristics of zone 2. The extruder apparatus may also be used to extrude a third rubber compound having the desired characteristics of zone 3. Thus the chafer may be divided into multiple zones, wherein each zone has a different material composition. FIG. 4 illustrates a comparative example of the tire bead area. Everything is the same, except for the following. The tire chafer 400 has been divided into only two zones 410 and 430.

## II. Apparatus

FIG. 1 illustrates a first embodiment of a method and apparatus 10 for a continuous mixing system suitable for use for making rubber compositions for tires or tire components. The continuous mixing system 10 is not limited to tire applications and may be used for example, to make other rubber components not related to tires such as conveyors, hoses, belts, etc. The continuous mixing system is particularly suited for making small tire components having a varying composition, such as inserts, apexes and treads (including those for retreaded tires). The mixing system may be provided directly at the tire or component building station for direct application of the rubber composition to a tire building drum or other component building apparatus. As shown in FIG. 1, the continuous mixing apparatus 10 includes a main extruder 20. The main extruder 20 has an inlet 22 for receiving one or more rubber compositions as described in more detail, below. The main extruder may comprise any commercial extruder suitable for processing of rubber or elastomer compounds. The extruder may comprise a commercially available extruder commonly known by those skilled in the art as a pin type extruder, a twin screw or a single screw extruder, or a ring type of extruder. One commercially available extruder suitable for use is a multicut transfermix (MCT) extruder, sold by VMI Holland BV, The Netherlands. Preferably, the extruder has a length to diameter ratio (L/D) of 5, but may range from 3 to 5. A ring type, pin type or MCT type of extruder is preferred, but is not limited to same. The main extruder 20 functions to warm up the compound A to the temperature in the range of 80°C to 150°C, preferably 90 °C to 120°C, and to masticate the rubber composition as needed.

The main extruder inlet 22 receives a first compound A, which may be a productive or non-productive rubber composition. Examples of compound A compositions are described in more detail, below. Compound A is first extruded by a first extruder 8 and optionally a second pump 5, preferably a gear pump. The extruder 8 may be a conventional pin type, ring type, dual screw or single screw type extruder. The pump 5 functions as a metering device and a pump and may have gears such as planetary gears, bevel gears or other gears. The extruder 8 and gear pump 5 may also be a combination unit. Preferably, the extruder 8 has an L/D of about 3, but may range from 3 to 6.

A second compound, referred to as "compound B" also enters the main extruder 20 at the inlet 22 and is mixed together with compound A as the compounds travel through the main extruder. Compound B may also comprise a productive or non-productive rubber composition. Examples of compound B compositions are described in more detail, below. Compound B is first extruded by second extruder 40 and optionally a second pump 42, preferably a gear pump. The extruder 40 may be a conventional pin type, ring type, dual screw or single screw type extruder. The pump 42 functions as a metering device and a pump and may have gears such as planetary gears, bevel gears or other gears. The extruder 40 and gear pump 42 may also be a combination unit. Preferably, the extruder 40 has an L/D of about 3, but may range from 3 to 6.

The main extruder 20 blends compound A and compound B together in a precisely controlled amount. Oil may also be optionally injected into the main extruder 22 via an oil pump 60. The oil pump may be located at any desired location, but is preferably located at the inlet 22. The oil controls the viscosity of the compound mixture.

The apparatus 10 may further include a first additive pump 70 for pumping one or more additives such as a primary accelerator, which is added to the mixture at the main extruder inlet 22. The apparatus may further include a second additive pumping device 80 for pumping one or more additives such as a secondary accelerator into the main extruder inlet 22. The additive pumps 70, 80 may be gear pumps, gear pump extruders, Venturi pumps or other pumping means known to those skilled in the art.

If more than one accelerator is used, they may be added into the mixture separately or together. For example, a primary accelerator and a secondary accelerator may both be added. Accelerators are used to control the time and/or temperature required for vulcanization and to improve the properties of the rubber. The accelerator may be in powder form or an encapsulated powder into a resin or rubber base. Examples of accelerator compositions are described in more detail, below.

Other additives include a curative agent or precursor, which may also be added to the mixer via additive pump 90. One example of a curative agent is sulfur. The sulfur may be added in solid form. The additive pump 90 may be a gear pump, gear pump extruder combination, Venturi pump or other pumping means known to those skilled in the art.

Thus all of the constituents including compound A, compound B, sulfur, oil and any desired curative agents or precursors, or accelerators of the desired rubber composition are added to the inlet of the main extruder 20. The main extruder blends all the constituents together and produces an output mixture of compound C which is a precise mixture of the A and B compound, optional oil the optional accelerant and optional additives. The output mixture of compound C exits the main extruder and enters an optional gear pump 25. The optional gear pump 25 and main extruder 20 is preferably located in close proximity adjacent a tire component building station or tire building station 95 for direct application onto a core, mandrel, blank or tire building drum, as shown in FIG. 6. Gear pump 25 preferably has a special nozzle 95 or shaping die which applies the compound formulation output from the mixer exit directly onto the tire building machine 95 in strips which are wound onto a tire building drum or core.

The ratio of the volumetric flow rate of compound A to the volumetric flow rate of compound B is precisely controlled by the ratio of the speed of the gear pump 5 for compound A and the speed of gear pump 42 for compound B. For example, the compound output from the system 10 may comprise a ratio of 20% of compound A and 80% of compound B by volume. Alternatively, the compound output from the system may comprise a mixture D having a ratio of 35% of compound B and 65% of compound A by volume. Alternatively, the compound output from the system may comprise a mixture Z having a ratio of 10% of compound B and 90% of compound A by volume. The ratio of compound A to compound B can thus range from 0:100% to 100%:0. The ratio may be adjusted instantaneously by varying the speeds of gear pumps 25 and 42 by a computer controller 99. The computer controller 99 may additionally controls the extruder and gear pump operating parameters such as operating pressure, operating temperature, pump or screw speed.

Preferably, the computer controller 99 sets a pressure target value for the exit pressure of each extruder. The extruder speed is controlled by the controller, and is varied until the pressure target is met. The pressure target value affects the quality of mixing by causing backflow of the material in the extruder.

The system 10 advantageously has a short residence time due to the following design features. First, all the components of compound C are added at the inlet of the main extruder. Because all the ingredients are added at the exact same location, precise formulations can be generated and controlled. Second, each extruder has a small length to diameter ratio. Third, the system is preferably located adjacent a component building station or tire building station to minimize the system line lengths in order to further reduce system residence time.

FIG. 2 illustrates a second embodiment of the extruder apparatus of the present invention. Everything is the same as described above, except for the following. Compound A is fed into the inlet 22 of the main extruder 20. Compound B passes through an extruder 40 in combination with a gear pump 42 as described above, and then is fed into the main extruder at a specific upstream location identified herein for reference purposes as "L." A primary accelerator is pumped through a pumping device 70 and enters the main extruder at the same location L. An optional secondary accelerator passes through a pumping device 80 and then enters the main extruder 20 at the same location L. Other additives include a curative agent or precursor, which may also be added to the mixer at location L via additive pump 90. Thus the addition of all the ingredients at the same extruder location allows for precise control of the compound constituents.

The following are compositions which may be used in conjunction with the invention.

III. Accelerator Compositions

In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanized rubber. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound. Suitable guanidines include diphenylguanidine and the like. Suitable thiurams include tetramethylthiuram disulfide, tetraethylthiuram disulfide, and tetrabenzylthiuram disulfide.

IV. Rubber Compositions

Representative rubbers that may be used in the rubber compound include acrylonitrile/diene copolymers, natural rubber, halogenated butyl rubber, butyl rubber, cis-1,4-polyisoprene, styrene-butadiene copolymers, cis-1,4-polybutadiene, styrene-isoprene-butadiene terpolymers ethylene-propylene terpolymers, also known as ethylene/propylene/diene monomer (EPDM), and in particular ethylene/propylene/dicyclopentadiene terpolymers. Mixtures of the above rubbers may be used. Each rubber layer may comprise of the same rubber composition or alternating layers may be of different rubber composition.

The rubber compound may contain a platy filler. Representative examples of platy fillers include talc, clay, mica and mixture thereof. When used, the amount of platy filler ranges from 25 to 150 parts per 100 parts by weight of rubber (hereinafter referred to as phr). Preferably, the level of platy filler in the rubber compound ranges from 30 to 75 phr.

The various rubber compositions may be compounded with conventional rubber compounding ingredients. Conventional ingredients commonly used include carbon black, silica, coupling agents, tackifier resins, processing aids, antioxidants, antiozonants, stearic acid, activators, waxes, oils, sulfur vulcanizing agents and peptizing agents. As known to those skilled in the art, depending on the desired degree of abrasion resistance, and other properties, certain additives mentioned above are commonly used in conventional amounts. Typical additions of carbon black comprise from 10 to 150 parts by weight of rubber, preferably 50 to 100 phr. Typical amounts of silica range from 10 to 250 parts by weight, preferably 30 to 80 parts by weight and blends of silica and carbon black are also included. Typical amounts of tackifier resins comprise from 2 to 10 phr. Typical amounts of processing aids comprise 1 to 5 phr. Typical amounts of antioxidants comprise 1 to 10 phr. Typical amounts of antiozonants comprise 1 to 10 phr. Typical amounts of stearic acid 0.50 to 3 phr. Typical amounts of accelerators comprise 1 to 5 phr. Typical amounts of waxes comprise 1 to 5 phr. Typical amounts of oils comprise 2 to 30 phr. Sulfur vulcanizing agents, such as elemental sulfur, amine disulfides, polymeric polysulfides, sulfur olefin adducts, and mixtures thereof, are used in an amount ranging from 0.2 to 8 phr. Typical amounts of peptizers comprise from 0.1 to 1 phr.

V. Oil

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

**Claims**

1. A pneumatic tire comprising a carcass (220), the carcass (220) having one or more cord reinforced plies (240, 260) and a pair of bead portions (180) each comprising a bead core (200), wherein at least one of the bead portions (180) comprises a chafer (400) comprising three zones (410, 420, 430), wherein the three zones (410, 420, 430) are formed of different materials, wherein the first zone (410) extends from axially inward of the bead core (200) to an end (411) axially outward of the bead core (200), the second zone (420) extends from the end (411) of the first zone (410) to an end (422) of the second zone (420) located radially outward of the end (411) of the first zone (410), and the third zone (430) extends from the radially outer end (422) of the second zone (420) to the radially outer end of the chafer (400), **characterized in that** the end (411) of the first zone (410) axially outward of the bead core (200) is located radially between the radially outermost end of the bead core (200) and the radially innermost end of the bead core (200).

2. The tire of claim 1 wherein the first zone (410) extends from axially inward of the bead core (200) from an axially inner end of the first zone (410) which is located radially between the radially outermost end the bead core (200) and the radially innermost end of the bead core (200).

3. The tire of at least one of the previous claims wherein each bead portion (180) has at least one annular inextensible bead core (200) about which the cord reinforced plies (240, 260) are wrapped, and wherein the tire comprises a tread and a belt reinforcing structure disposed radially outward of the carcass.

4. The tire of at least one of the previous claims wherein each bead portion (180) comprises an apex (280), preferably an at least essentially triangular shaped apex, which extends radially outward of the bead core (200).

5. The tire of at least one of the previous claims wherein the first zone (410) is formed of a material having a G"/G' ratio in the range of from 0.2 to 0.245

6. The tire of at least one of the previous claims wherein the second zone (420) is formed of a material having a G"/G' ratio in the range of from 0.155 to 0.183.

7. The tire of at least one of the previous claims wherein the third zone (430) is formed of a material having a G"/G' ratio in the range of from 0.125 to 0.133.

8. The tire of at least one of the previous claims wherein both bead portions (180) comprise said zoned chafer (400).

**9.** The tire of at least one of the previous claims 1 to 7 wherein only one bead portion (180) comprises said zoned chafer (400) and the other bead portion comprises a chafer having only one zone.

**10.** The tire of at least one of the previous claims 1 to 7 wherein only one bead portion (180) comprises said zoned chafer (400) and the other bead portion comprises a chafer having one zone less than said zoned chafer (400).

**Patentansprüche**

**1.** Luftreifen, umfassend eine Karkasse (220), welche Karkasse (220) eine oder mehr kordverstärkte Lagen (240, 260) aufweist, und ein Paar Wulstbereiche (180), die jeder einen Wulstkern (200) umfassen, wobei mindestens einer der Wulstbereiche (180) einen Wulstschutzstreifen (400) umfasst, der drei Zonen (410, 420, 430) umfasst, wobei die drei Zonen (410, 420, 430) aus verschiedenen Materialien gebildet sind, wobei die erste Zone (410) sich von axial einwärts von dem Wulstkern (200) zu einem Ende (411) axial auswärts von dem Wulstkern (200) erstreckt, die zweite Zone (420) sich von dem Ende (411) der ersten Zone (410) zu einem radial auswärts von dem Ende (411) der ersten Zone (410) befindlichen Ende (422) der zweiten Zone (420) erstreckt, und die dritte Zone (430) sich von dem radial äußeren Ende (422) der zweiten Zone (420) zu dem radial äußeren Ende des Wulstschutzstreifens (400) erstreckt, **dadurch gekennzeichnet, dass** das Ende (411) der ersten Zone (410) axial auswärts von dem Wulstkern (200) sich radial zwischen dem radial äußersten Ende des Wulstkerns (200) und dem radial innersten Ende des Wulstkerns (200) befindet.

**2.** Reifen nach Anspruch 1, wobei die erste Zone (410) sich von axial einwärts von dem Wulstkern (200) von einem axial inneren Ende der ersten Zone (410) erstreckt, das sich radial zwischen dem radial äußersten Ende des Wulstkerns (200) und dem radial innersten Ende des Wulstkerns (200) befindet.

**3.** Reifen nach mindestens einem der vorgenannten Ansprüche, wobei jeder Wulstbereich (180) mindestens einen ringförmigen unausdehnbaren Wulstkern (200) aufweist, um den die kordverstärkten Lagen (240, 260) herumgeschlagen sind, und wobei der Reifen eine radial auswärts von der Karkasse angeordnete Lauffläche und eine Gürtelverstärkungsstruktur umfasst.

**4.** Reifen nach mindestens einem der vorgenannten Ansprüche, wobei jeder Wulstbereich (180) ein Kernprofil (280) umfasst, bevorzugt ein mindestens im Wesentlichen dreieckiges Kernprofil, das sich radial auswärts von dem Wulstkern (200) erstreckt.

**5.** Reifen nach mindestens einem der vorgenannten Ansprüche, wobei die erste Zone (410) aus einem Material mit einem G"/G'-Verhältnis im Bereich von 0,2 bis 0,245 besteht.

**6.** Reifen nach mindestens einem der vorgenannten Ansprüche, wobei die zweite Zone (420) aus einem Material mit einem G"/G'-Verhältnis im Bereich von 0,155 bis 0,183 besteht.

**7.** Reifen nach mindestens einem der vorgenannten Ansprüche, wobei die dritte Zone (430) aus einem Material mit einem G"/G'-Verhältnis im Bereich von 0,125 bis 0,133 besteht.

**8.** Reifen nach mindestens einem der vorgenannten Ansprüche, wobei beide Wulstbereiche (180) den in Zonen unterteilten Wulstschutzstreifen (400) umfassen.

**9.** Reifen nach mindestens einem der vorgenannten Ansprüche 1 bis 7, wobei nur ein Wulstbereich (180) den in Zonen unterteilten Wulstschutzstreifen (400) umfasst und der andere Wulstbereich einen Wulstschutzstreifen umfasst, der nur eine Zone aufweist.

**10.** Reifen nach mindestens einem der vorgenannten Ansprüche 1 bis 7, wobei nur ein Wulstbereich (180) den in Zonen unterteilten Wulstschutzstreifen (400) umfasst und der andere Wulstbereich einen Wulstschutzstreifen umfasst, der eine Zone weniger als der in Zonen unterteilte Wulstschutzstreifen aufweist.

**Revendications**

**1.** Bandage pneumatique comprenant une carcasse (220), la carcasse (220) possédant une ou plusieurs nappes renforcées avec des câblés (240, 260) et une paire de portions faisant office de talons (180) comprenant chacune une tringle de talon (200), dans lequel au moins une des portions faisant office de talons (180) comprend une bandelette talon (400) comprenant trois zones (410, 420, 430), dans lequel les trois zones (410, 420, 430) sont constituées par des matières différentes, dans lequel la première zone (410) s'étend depuis l'intérieur en direction axiale de la tringle de talon (200) jusqu'à une extrémité (411) située en direction axiale à l'extérieur de la tringle de talon (200), la deuxième zone (420) s'étend depuis l'extrémité (411) de la première zone (410) jusqu'à une extrémité (422) de la deuxième zone (420) située en direction radiale à l'extérieur de l'extrémité (411) de la première zone (410), et la troisième zone 430 s'étend depuis l'extrémité externe en direction radiale (422) de la deuxième zone (420) jusqu'à l'extrémité externe en direction radiale (400) de la bandelette talon, **caractérisé en ce que** l'extrémité (411) de la première zone (410) en direction axiale à l'extérieur de la tringle de talon (200) est disposée en direction radiale entre l'extrémité en direction radiale la plus externe de la tringle de talon (200) et l'extrémité en direction radiale la plus interne de la tringle de talon (200).

2. Bandage pneumatique selon la revendication 1, dans lequel la première zone (410) s'étend depuis l'intérieur en direction axiale de la tringle de talon (200) depuis une extrémité interne en direction axiale de la première zone (410) qui est disposée en direction radiale entre l'extrémité en direction radiale la plus externe de la tringle de talon (200) et l'extrémité en direction radiale la plus interne de la tringle de talon (200).

3. Bandage pneumatique selon au moins une des revendications précédentes, dans lequel chaque portion faisant office de talon (180) possède au moins une tringle de talon annulaire inextensible (200) autour de laquelle viennent s'enrouler les nappes renforcées avec des câblés (240, 260), et dans lequel le bandage pneumatique comprend une bande de roulement et une structure de renforcement de ceinture disposée en direction radiale à l'extérieur de la carcasse.

4. Bandage pneumatique selon au moins une des revendications précédentes, dans lequel chaque portion faisant office de talon (180) comprend un bourrage sur tringle (280), de préférence un bourrage sur tringle au moins essentiellement triangulaire, qui s'étend en direction radiale à l'extérieur de la tringle de talon (200).

5. Bandage pneumatique selon au moins une des revendications précédentes, dans lequel la première zone (410) est constituée d'une matière possédant un rapport G"/G' dans la plage de 0,2 à 0,245.

6. Bandage pneumatique selon au moins une des revendications précédentes, dans lequel la deuxième zone (420) est constituée d'une matière possédant un rapport G"/G' dans la plage de 0,155 à 0,183.

7. Bandage pneumatique selon au moins une des revendications précédentes, dans lequel la troisième zone (430) est constituée d'une matière possédant un rapport G"/G' dans la plage de 0,125 à 0,133.

8. Bandage pneumatique selon au moins une des revendications précédentes, dans lequel les deux portions faisant office de talons (180) comprennent ladite bandelette talon (400) disposée en zones.

9. Bandage pneumatique selon au moins une des revendications précédentes 1 à 7, dans lequel une seule portion faisant office de talon (180) comprend ladite bandelette talon (400) disposée en zones et l'autre portion faisant office de talon comprend une bandelette talon comportant une seule zone.

10. Bandage pneumatique selon au moins une des revendications précédentes 1 à 7, dans lequel une seule portion faisant office de talon (180) comprend ladite bandelette talon (400) disposée en zones et l'autre portion faisant office de talon comprend une bandelette talon comportant une zone de moins que ladite bandelette talon (400) disposée en zones.

FIG-1

EP 2 468 538 B1

Compound "B"

40

100

Primary Accelerator

70

42

Compound "A"

25

20

8

GP

5

80

Secondary Accelerator

90

FIG-2

Sulfur

100

260

240

220

280

180

200

160

430

422

420

400

411

421

410

FIG-3

FIG-4

Strain Control

432

430

100

180

200

420

400

Energy Control

FIG-5

410

Stress Control

13

**EP 2 468 538 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11301220 A
- JP 8156533 A
- US 5033524 A
- US 5263526 A